# EUROPEAN PATENT SPECIFICATION

(11) **EP 4 358 500 B1**
(45) Date of publication and mention of the grant of the patent: **01.10.2025**
(21) Application number: 23728576.2
(22) Date of filing: 30.05.2023
(51) Int. Cl.: H04M 1/03, H04M 1/02, H05K 5/06, G06F 1/16, H04M 1/18

(54) **ELECTRONIC DEVICE COMPRISING SPEAKER**
ELEKTRONISCHE VORRICHTUNG MIT LAUTSPRECHER
DISPOSITIF ÉLECTRONIQUE COMPRENANT UN HAUT-PARLEUR

(30) Priority: 19.08.2022 KR 20220103959; 07.09.2022 KR 20220113193
(43) Date of publication of application: 24.04.2024
(73) Proprietor: Samsung Electronics Co., Ltd., Suwon-si, Gyeonggi-do 16677 (KR)
(72) Inventor: KIM, Jinkyun, Suwon-si Gyeonggi-do 16677 (KR); KIM, Hongjun, Suwon-si Gyeonggi-do 16677 (KR); SEOL, Minjeong, Suwon-si Gyeonggi-do 16677 (KR); JANG, Jiwon, Suwon-si Gyeonggi-do 16677 (KR)
(74) Representative: Gulde & Partner
(86) International application number: PCT/KR2023/007379
(87) International publication number: WO 2024/039012

(56) References cited:
- EP-A1- 4 020 948
- EP-B1- 1 868 357
- CN-A- 111 770 221
- CN-U- 216 700 295
- KR-A- 20140 098 384
- KR-A- 20220 109 861
- KR-A- 20220 112 482
- US-B1- 6 321 070

## Description

### BACKGROUND

### FIELD

Various embodiments relate to an electronic device including a speaker configured to emit sound to a housing.

### DESCRIPTION OF RELATED ART

Electronic devices are slimmed down and enhanced to differentiate functional elements while reinforcing rigidity and design aspects. Electronic devices are evolving to have various shapes as well as their stereotypical rectangular shape. Electronic devices may have a transformable structure that allows for use of a larger display and ease to carry. For example, as part of a deformable structure, an electronic device may include at least two foldable housings that operate to fold or unfold with respect to each other. Such an electronic device may include a plurality of electronic components in an inner space. An electronic device may require an efficient layout for performing individual functions without interfering with the functions of electronic components.

US 6 321 070 B1 discloses a portable electronic device with a speaker assembly. The portable electronic device has a housing, which includes an upper housing and a lower housing, configured to carry at least one of a receiver and a transmitter. A speaker has a front side acoustically coupled to a first air space in front of an ear placement region of the upper housing. The speaker has a rear side acoustically coupled to a second air space. At least a first passage acoustically couples the first air space to a third air space that is substantially separated from the second air space

CN 111 770 221 A discloses an electronic device comprising a first main body, a second main body, a loudspeaker module and a connecting pipe, wherein the two main bodies can relatively rotate to a folded state or an unfolded state. A first cavity and a loudspeaker module are arranged in the first main body, and the first cavity is communicated with the loudspeaker module. A second cavity is formed in the second main body, the connecting pipe is arranged at the rotating joint of the first main body and the second main body, and the two ends of the connecting pipe are communicated with the first cavity and the second cavity, respectively.

EP 4 020 948 B1 discloses an electronic device, including a frame body provided with a sound cavity, where the sound cavity includes a sound inlet and a sound outlet, a receiver, where a sound outlet surface of the receiver covers the sound inlet, a cover body covering the sound outlet, where a sound outlet channel communicating with the sound cavity is formed between the cover body and the frame body, and a display screen connected to the cover body and a side of the frame body away from the receiver. The sound outlet channel is not integrated with the cover body, and after the cover body and the frame body are assembled, a gap communicating with the sound cavity is provided between the cover body and the frame body to form the sound outlet channel, so as to significantly reduce a space occupied by the cover body, thereby increasing a size of the display screen and increasing a screen-to-body ratio of the display screen.

EP 1 868 357 B1 discloses an apparatus and method for speaker control in a mobile terminal. The mobile terminal includes a first body having first and second key input units, and a second body having a display unit and swingably connected in at least one of a clockwise and counterclockwise rotation, such that the display can be positioned in a vertical direction in a closed state and in a horizontal direction in an open state, and at least two sound emission holes are formed on an upper surface of the second body for outputting sounds from at least two speakers, based on the open and closed state.

### SUMMARY

The user may make a call with the call receiver, i.e. the part of the electronic device emitting the received sound, for example the voice of the talking partner, positioned near her ear even in a state where the electronic device (e.g., foldable electronic device) is unfolded to some degree. When desiring to continue the call in the folding state, the user may switch to speaker phone mode to do so.

The foldable electronic device according to an embodiment may provide a call receiver structure that allows the user to make a call even in the folding state.

According to the invention, an electronic device comprises a housing including a first housing and a second housing, a hinge rotatably connecting the first housing and the second housing, and a speaker received in the first housing. The first housing includes a sound emission hole configured to emit a rear sound generated from the speaker and disposed in a rear surface of the first housing. The rear sound may be emitted to a rear side of the speaker. The rear side of the speaker may be the side of the sound-generating element of the speaker which is oriented towards a housing of the speaker. The sound emission hole is disposed in a portion adjacent to the side surface of the first housing farthest from the speaker.

According to an embodiment, as the foldable electronic device includes a call receiver structure to output the rear sound of the speaker in the folded state of the foldable electronic device, a voice call may easily be performed even in the folded state.

According to an embodiment, the call receiver structure may play a role to adjust the internal pressure of the foldable electronic device. Thus, it is possible to omit the conventional structure for adjusting internal pressure.

Effects of the present invention are not limited to the foregoing, and other unmentioned effects would be apparent to one of ordinary skill in the art from the following description. In other words, unintended effects in practicing embodiments of the disclosure may also be derived by one of ordinary skill in the art from the embodiments of the disclosure.

### BRIEF DESCRIPTION OF THE DRAWINGS

FIG. 1 is a view illustrating an electronic device in a network environment according to various embodiments;
FIG. 2A is a perspective view illustrating a foldable electronic device in an unfolding state according to an example embodiment;
FIG. 2B is a perspective view illustrating a foldable electronic device in a folding state according to an example embodiment;
FIG. 3 is an exploded view illustrating a foldable electronic device according to an example embodiment;
FIG. 4 is a plan view illustrating a foldable electronic device in a folding state according to an example embodiment;
FIG. 5 is a view illustrating the foldable electronic device without the rear cover in FIG. 4;
FIG. 6A is an exploded view illustrating a portion of a foldable electronic device according to an example embodiment;
FIG. 6B is an exploded view illustrating a portion of a foldable electronic device according to an example embodiment;
FIG. 7 is a cross-sectional view of the foldable electronic device of FIG. 4 taken along line VII-VII';
FIG. 8 is an enlarged view of portion A of FIG. 7;
FIGS. 9A and 9B are enlarged view of portion B of FIG. 7;
FIG. 10 is a plan view illustrating a foldable electronic device in a folding state according to an example embodiment;
FIG. 11 is a cross-sectional view taken along line XI-XI' of FIG. 10;
FIG. 12 is an enlarged view of portion C of FIG. 11;
FIG. 13 is a view illustrating a use example of a foldable electronic device according to an example embodiment;
FIG. 14 is a graph illustrating the performance of a speaker provided in a foldable electronic device according to an example embodiment;
FIG. 15 is a graph illustrating the performance of a speaker provided in a foldable electronic device according to an example embodiment;
FIG. 16 is a graph illustrating the performance of a speaker provided in a foldable electronic device according to an example embodiment;

Reference may be made to the accompanying drawings in the following description, and specific examples that may be practiced are shown as examples within the drawings. Other examples may be utilized and structural changes may be made without departing from the scope of the various examples.

### DETAILED DESCRIPTION

Embodiments of the present invention are now described with reference to the accompanying drawings in such a detailed manner as to be easily practiced by one of ordinary skill in the art. However, the disclosure may be implemented in other various forms and is not limited to the embodiments set forth herein. The same or similar reference denotations may be used to refer to the same or similar elements throughout the specification and the drawings. Further, for clarity and brevity, no description is made of well-known functions and configurations in the drawings and relevant descriptions.

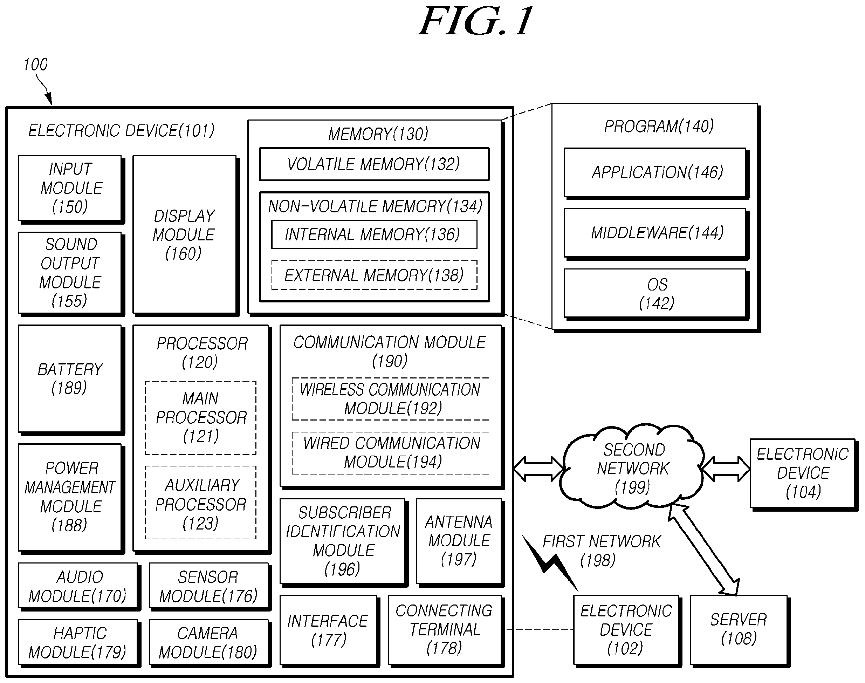

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

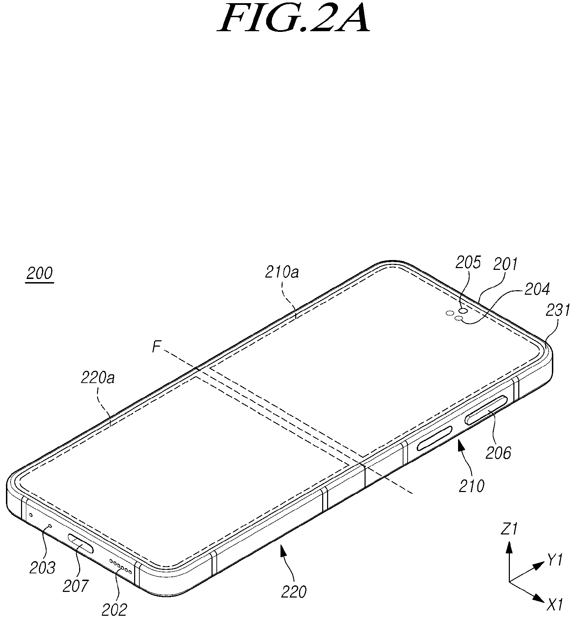

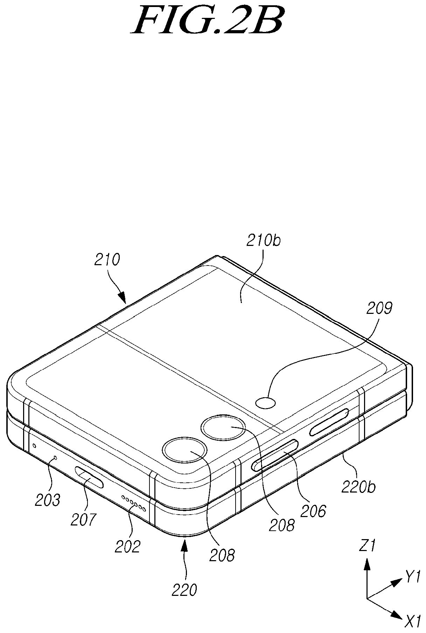

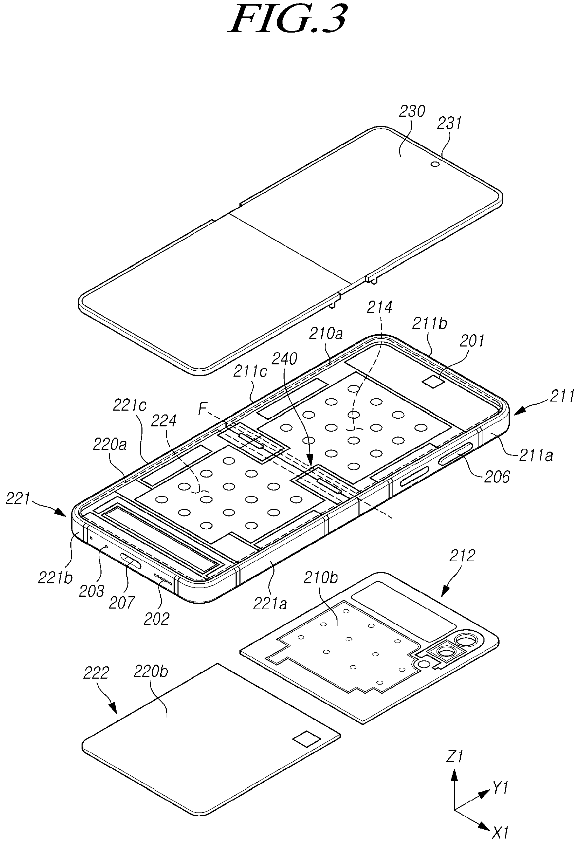

FIG. 2A is a perspective view illustrating a foldable electronic device in an unfolding state according to an example embodiment. FIG. 2B is a perspective view illustrating a foldable electronic device in a folding state according to an example embodiment. FIG. 3 is an exploded view illustrating a foldable electronic device according to an example embodiment. The foldable electronic device shown in FIGS. 2A and 3 is for illustrative purposes only, and the disclosure is not limited by the drawings. The XYZ coordinate system shown in FIGS. 2A to 3 is for illustrative purposes of describing the layout of the components and does not limit the scope of the claims.

The electronic device 200 (e.g., the electronic device 101 of FIG. 1) according to the invention includes at least one pair of housings 210 and 220. The pair of housings 210 and 220 are rotatably coupled to fold about a hinge (e.g., the hinge 240 of FIG. 3) while facing each other. The pair of housings 210 and 220 includes a first housing 210 and a second housing 220. The first housing 210 and the second housing 220 may be disposed on two opposite sides of the folding axis F. The first housing 210 and the second housing 220 may have symmetrical shapes with respect to the folding axis F. Here, the folding axis F may be an axis in the X1 direction, formed by the hinge 240.

The first housing 210 may have substantially the same length as the second housing 220 (e.g., length in the Y1-axis direction), but is not limited thereto. The first housing 210 may have substantially the same width as the second housing 220 (e.g., width in the X1-axis direction), but is not limited thereto.

Hereinafter, 'unfolding state (or flat state)' or 'unfolded state' may refer to a state in which the angle between the first housing 210 and the second housing 220 is substantially 180 degrees. 'Folding state' or a 'folded state' may refer to a state in which the angle formed between the first housing 210 and the second housing 220 is substantially 0 degrees. 'Intermediate state' may refer to any state between the unfolding state and the folding state. The electronic device 200 may rotate about the hinge 240 such that the first housing 210 and the second housing 220 form an angle from 0 degrees to 180 degrees, for example. The electronic device 200 may also rotate about the hinge 240 to form an angle, e.g., between 180 degrees and 360 degrees.

The first housing 210 may include a first surface 210a and a second surface 210b. For example, the first surface 210a may be provided to face in a first direction (e.g., +Z1-axis direction). The first surface 210a may be, e.g., a surface on which at least a portion of the flexible display 230 is disposed. The first surface 210a may refer to, e.g., a virtual surface overlapping at least a portion of the flexible display 230. For example, the second surface 210b may be provided to face in a second direction (e.g., -Z1-axis direction). The second surface 210b may be, e.g., a surface on which the first rear cover 212 is disposed. The second surface 210b may be parallel to the first surface 210a. The second surface 210b may refer to a plane defined by, e.g., the first rear cover 212.

The second housing 220 may include a third surface 220a and a fourth surface 220b. For example, the third surface 220a may be provided to face in the first direction (e.g., +Z1-axis direction). The third surface 220a may be, e.g., a surface on which at least a portion of the flexible display 230 is disposed. The third surface 220a may refer to, e.g., a virtual surface overlapping at least a portion of the flexible display 230. For example, the fourth surface 220b may be provided to face in a second direction (e.g., -Z1-axis direction). The fourth surface 220b may be, e.g., a surface on which the second rear cover 222 is disposed. The fourth surface 220b may be parallel to the third surface 220a. The fourth surface 220b may refer to a plane defined by, e.g., the second rear cover 222.

When the electronic device 200 is unfolded, the first surface 210a and the third surface 220a may be positioned within one arbitrary virtual plane (e.g., an x-y plane). For example, the first surface 210a and the third surface 220a may form the same plane when the electronic device 200 is unfolded. For example, the first surface 210a and the third surface 220a may be disposed to form an angle of 180 degrees with respect to the x-y plane in the unfolded state. When the electronic device 200 is unfolded, the second surface 210b and the fourth surface 220b may be positioned within another arbitrary virtual plane (e.g., an x-y plane). For example, the second surface 210b and the fourth surface 220b may form the same plane in the unfolded state of the electronic device 200. For example, the second surface 210a and the fourth surface 220b may be disposed to form an angle of 180 degrees with respect to the x-y plane in the unfolded state.

In the folded state of the electronic device 200, at least a portion of the first surface 210a and at least a portion of the third surface 220a may face each other. For example, in the folded state of the electronic device 200, the angle between the first surface 210a and the third surface 220a may be 0 degrees from the x-y plane. While the electronic device 200 is folded from the unfolded state, the angle between the first surface 210a and the third surface 220a from the x-y plane may gradually decrease. For example, the angle formed between the first surface 210a and the third surface 220a from the x-y plane in the intermediate state may be determined to be between about 0 degrees and about 180 degrees. In the folded state of the electronic device 200, the second surface 210b and the fourth surface 220b may be parallel to each other. For example, the second surface 210b and the fourth surface 220b may face in opposite directions in the folded state of the electronic device 200.

The pair of housings 210 and 220 included in the electronic device 200 is not limited to the shape and coupling shown but may rather be implemented in other shapes or via a combination and/or coupling of other components.

The first housing 210 may include a first side frame 211. The first side frame 211 may constitute a side surface of the first housing 210. The first side frame 211 may form part of the exterior of the first housing 210. The first side frame 211 may be provided to protect components received inside the electronic device 200 from the outside.

The first side frame 211 may include a first side member 211a, a second side member 211b, and/or a third side member 211c. The first side member 211a may have a first length along a first length direction (e.g., Y1-axis direction). The second side member 211b may extend from the first side member 211a in a substantially vertical direction (e.g., the X1-axis direction). The second side member 211b may extend to have a second length equal to or different from the first length. The third side member 211c may extend from the second side member 211b in a substantially vertical direction (e.g., the Y1-axis direction). The third side member 211c may extend in a direction substantially parallel to the first side member 211a. The third side member 211c may have a first length along the first length direction (e.g., Y1-axis direction).

The first side member 211a, the second side member 211b, and the third side member 211c may be disposed to be visible from the outside. At least a portion of the first side member 211a, the second side member 211b, and/or the third side member 211c may be formed of a curved surface. The first side frame 211 may be formed in a rectangular (e.g., square or rectangular) shape by the first side member 211a, the second side member 211b, and the third side member 211c. The first side member 211a, the second side member 211b, and the third side member 211c may be integrally formed, but are not limited thereto.

The second housing 220 may include a second side frame 221. The second side frame 221 may constitute a side surface of the second housing 220. The second side frame 221 may form part of the exterior of the second housing 220. The second side frame 221 may be provided to protect components received inside the electronic device 200 from the outside. The second side frame 221 may include a fourth side member 221a, a fifth side member 221b, and/or a sixth side member 221c. The fourth side member 221a may have a third length along a first length direction (e.g., Y1-axis direction). The fifth side member 221b may extend from the fourth side member 221a in a substantially vertical direction (e.g., the X1-axis direction). The fifth side member 221b may extend to have a fourth length equal to or different from the third length. The sixth side member 221c may extend from the fifth side member 221b in a substantially vertical direction (e.g., the Y1-axis direction). The sixth side member 221c may extend in a direction substantially parallel to the fourth side member 221a. The sixth side member 221c may have a third length along the first length direction (e.g., Y1-axis direction).

The fourth side member 221a, the fifth side member 221b, and the sixth side member 221c may be disposed to be visible from the outside. At least a portion of the fourth side member 221a, the fifth side member 221b, and/or the sixth side member 221c may be formed of a curved surface. The second side frame 221 may be formed in a rectangular (e.g., square or rectangular) shape by the fourth side member 221a, the fifth side member 221b, and the sixth side member 221c. The first length may be substantially equal to the third length. The second length may be substantially equal to the fourth length. The fourth side member 221a, the fifth side member 221b, and the sixth side member 221c may be integrally formed, but are not limited thereto.

In the unfolded state of the electronic device 200, the first side member 211a and the fourth side member 221a may be positioned substantially in a straight line. In the unfolded state of the electronic device 200, the second side member 211b and the fifth side member 221b may be parallel to each other. In the unfolded state of the electronic device 200, the third side member 211c and the sixth side member 221c may be positioned substantially in a straight line.

In the folded state of the electronic device 200, the first side member 211a and the fourth side member 221a may overlap each other. In the folded state of the electronic device 200, the second side member 211b and the fifth side member 221b may overlap each other. In the folded state of the electronic device 200, the third side member 211c and the sixth side member 221c may overlap each other.

The first housing 210 may include a first rear cover 212. The first rear cover 212 may form at least a portion of the second surface 210b of the first housing 210. The first rear cover 212 may be coupled with the first side frame 211. The first rear cover 212 may be integrally formed with, e.g., the first side frame 211.

The second housing 220 may include a second rear cover 222. The second rear cover 222 may form at least a portion of the fourth surface 220b of the second housing 220. The second rear cover 222 may be coupled with the second side frame 221. The second rear cover 222 may be integrally formed with, e.g., the second side frame 221.

The first rear cover 212 and/or the second rear cover 222 may be formed of at least one of, or a combination of at least two of, laminated or colored glass, ceramic, polymer, or metal (e.g., aluminum, stainless steel (STS), or magnesium).

The electronic device 200 may include a flexible display 230 (e.g., a foldable display or display). The flexible display 230 may be disposed across the first housing 210, the hinge 240 and the second housing 220. The flexible display 230 may be disposed from the first surface 210a of the first housing 210 across the hinge structure 240 up to at least a portion of the third surface 220a of the second housing 220. The flexible display 230 may be disposed to overlay the first surface 210a of the first housing 210 and the third surface 220a of the second housing 220. A portion of the flexible display 230 corresponding to the hinge 240 may be bent according to the rotation of the hinge 240.

In the unfolding state, the flexible display 230 may be disposed to be visible from the outside. In a folding state, the flexible display 230 may be disposed to be invisible from the outside.

The electronic device 200 may include a protective cover 231. The protective cover 231 may be positioned to protect an edge portion of the flexible display 230. The protective cover 231 may form part of the exterior of the electronic device 200.

The electronic device 210 may include at least one of an input device (e.g., the microphone 203), a sound output device (e.g., the receiver 201 for phone calls or speaker 202), sensor modules 204, a camera module (the first camera module 205 or second camera module 208), a connector port 207, a key input device (not shown), or an indicator (not shown), disposed in the first inner space 214 of the first housing 210 or the second inner space 224 of the second housing 220. The electronic device 200 may be configured to omit at least one of the above-described components or add other components. For example, the sensor modules, the camera module(s), the key input device or the indicator, or any combination thereof, may be omitted. But according to the invention, the electronic device comprises a speaker received in the first housing.

The input device may include a plurality of microphones disposed to detect the direction of sound. The sound output device may include, e.g., the receiver 201 for phone calls and the speaker 202. The sound output devices 201 and 202 may be disposed to face the outside through at least one speaker hole formed in the first housing 210 or the second housing 220. The connector port 207 may be disposed to face the outside through a connector port hole formed in the first housing 210 or the second housing 220.

The sensor module 204 may produce an electrical signal or data value corresponding to the internal operation state or external environment state of the electronic device 200. The sensor module 204 may include at least one of a proximity sensor, an illuminance sensor, a time of flight (TOF) sensor, an ultrasonic sensor, a fingerprint recognition sensor, a gesture sensor, a gyro sensor, an air pressure sensor, a magnetic sensor, an accelerometer, a grip sensor, a color sensor, an infrared (IR) sensor, a biometric sensor, a temperature sensor, or a humidity sensor.

The camera module may include a first camera module 205 disposed on the front (e.g., surface in the +Z1-axis direction) of the electronic device 200 or a second camera module 208 disposed on the rear surface (e.g., surface in the -Z1-axis direction) of the electronic device 200. The first camera module 205 and/or the second camera module 208 may include one or more lenses, an image sensor, and/or an image signal processor. For example, the first camera module 205 may be disposed under the flexible display 230 and be configured to capture a subject through a portion of the active area of the flexible display 230. The flash 209 may be disposed on the second camera module 208. The flash 209 may include, e.g., a light emitting diode (LED) or a xenon lamp.

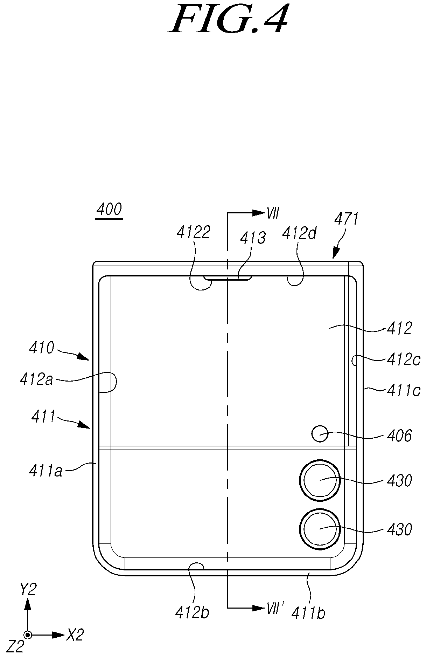

Hereinafter, the X2-Y2-Z2 coordinate system shown in FIGS. 4 to 12 is for illustrative purposes of describing the layout of the components and does not limit the scope of the claims.

Since the electronic device 400 shown in FIGS. 4 to 9B overall has the same or similar configuration as the electronic device 200 shown in FIGS. 2A to 3, no duplicate description thereof is given below.

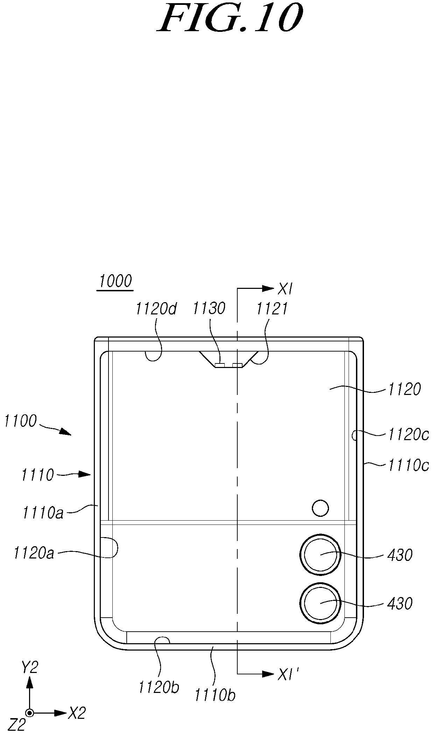

Hereinafter, the description in connection with FIGS. 4 to 9B focuses primarily on the structure of the first housing 410 but, without limitations thereto, the components of the first housing 410 described below may also be implemented in the second housing 420. The embodiment described in FIGS. 4 to 9B may be used in combination with the embodiment(s) shown in FIGS. 10 to 12.

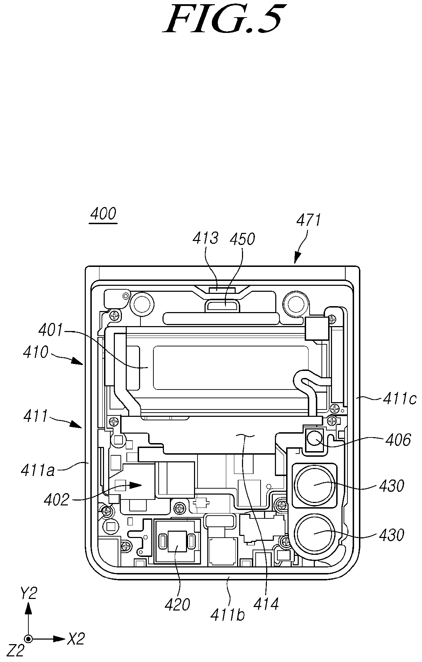

FIG. 4 is a plan view illustrating a foldable electronic device in a folding state according to an example embodiment. FIG. 5 is a view illustrating the foldable electronic device without the rear cover in FIG. 4. The foldable electronic device shown in FIGS. 4 and 5 is for illustrative purposes only, and the disclosure is not limited by the drawings.

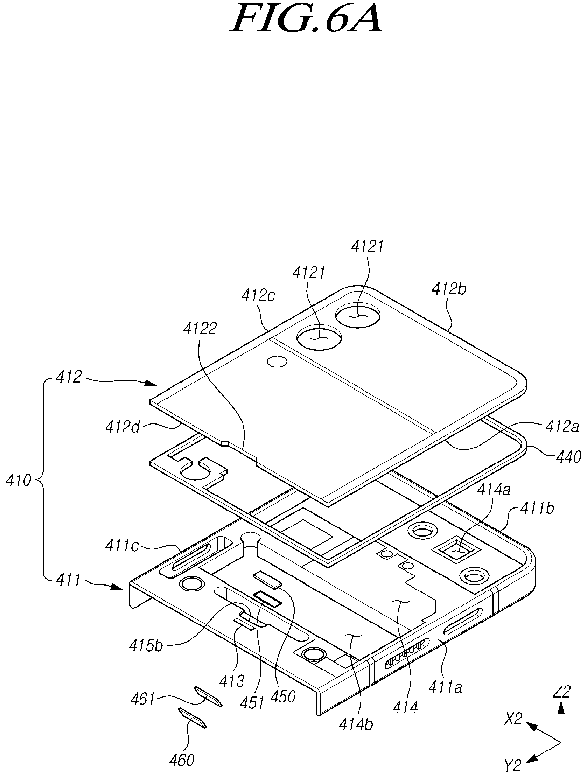

The first housing 410 may form an inner space 414 therein. Components necessary for implementing the electronic device 400 may be received in the inner space 414. The inner space 414 may include a battery receiving part (e.g., the battery receiving part 414b of FIG. 6A) in which the battery 401 may be received. The inner space 414 may include a speaker receiving part (e.g., the speaker receiving part 414a of FIG. 6A) in which the speaker 420 may be received. At least one camera module 430 may be received in the inner space 414. A flash 406 may be received in the inner space 414. A space in which sound output from the speaker 420 may move may be provided in the inner space 414.

A substrate assembly 402 may be formed in the inner space 414 of the first housing 410. The board assembly 402 may include a main printed circuit board. The substrate assembly 402 may be electrically connected to, e.g., the speaker 420.

The first housing 410 may include a side member 411. The side frame 411 may include a first side member 411a, a second side member 411b, and/or a third side member 411c. The first side member 411a may have a first length along a first length direction (e.g., Y2-axis direction). The second side member 411b may extend from the first side member 411a in a substantially vertical direction (e.g., the X2-axis direction). The second side member 411b may extend to have a second length equal to or different from the first length. The third side member 411c may extend from the second side member 411b in a substantially vertical direction (e.g., the Y2-axis direction). The third side member 411c may extend in a direction substantially parallel to the first side member 411a. The third side member 411c may have a first length along the first length direction (e.g., Y2-axis direction).

The first housing 410 may include a rear cover 412. The rear cover 412 may be defined by a first edge 412a, a second edge 412b, a third edge 412c and/or a fourth edge 412d. The first edge 412a may be, e.g., a portion positioned corresponding to the first side member 411a. The second edge 412b may be, e.g., a portion positioned corresponding to the second side member 411b. The third edge 412c may be, e.g., a portion positioned corresponding to the third side member 411c. For example, the fourth edge 412d may be a portion positioned corresponding to the hinge (e.g., the hinge 240 of FIG. 3) (or the hinge housing 471).

For example, the rear cover 412 may include a slit recess 4122 (or recess). The slit recess 4122 may be formed on the fourth edge 412d. The slit recess 4122 may be formed by digging a portion of the fourth edge 412d inward. The slit recess 4122 may be formed in a position corresponding to the sound emission hole 413, for example.

The rear cover 412 may include a hole or opening formed in a position corresponding to the sound emission hole 413. Such a hole or opening may be formed, e.g., through a portion adjacent to the fourth edge 412d rather than being formed by digging the fourth edge 412d.

The electronic device 400 includes a speaker 420. The speaker 420 may convert electrical audio signals into acoustic signals (sound) and output them. The speaker 420 may be received in the inner space 414 of the first housing 410, for example. The speaker 420 may be disposed adjacent to, e.g., the second side member 411b.

The first housing 410 includes the sound emission hole 413. The sound emission hole 413 is configured to emit sound (e.g., rear sound) output from the speaker 420 to the outside. The rear sound may be a sound generated as the rear surface of the speaker 420 provided inward of the first housing 410 is vibrated due to the sound output through the speaker 420 when the output surface of the speaker 420 is provided outward of the first housing 410. The sound emission hole 413 may be formed, e.g., in the side frame 411. The sound emission hole 413 may be provided so that, e.g., air communicates between the inner space 414 of the first housing 410 and the outside of the first housing 410. The sound emission hole 413 may have a rectangular shape, but this is an example and may have various shapes. A plurality of sound emission holes 413 may be formed in predetermined positions.

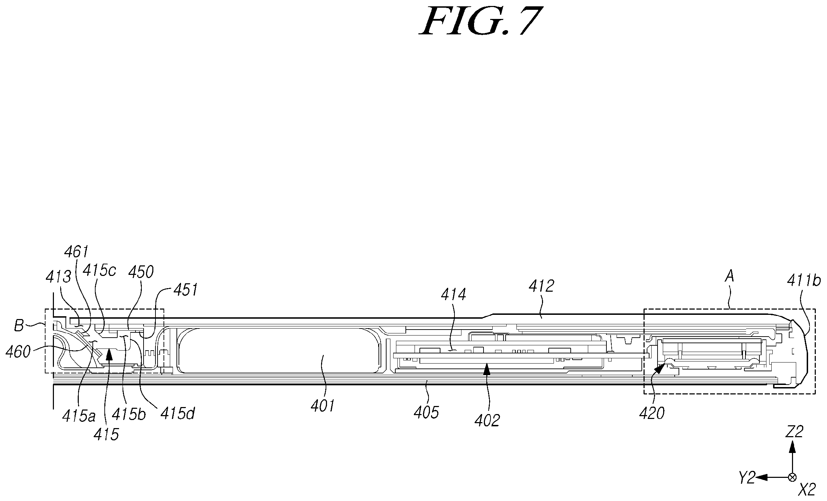

For example, the sound emission hole 413 is provided in the rear surface (e.g., the second surface 210b of FIG. 3) of the first housing 410. Alternatively, the sound emission hole 413 may also be provided in one of the first, second or third side members 411a, 411b, and 411c. The sound emission hole 413 may be provided, e.g., in the surface where the rear cover 412 is disposed. The sound emission hole 413 may be provided, e.g., in a surface opposite to the surface where the flexible display (e.g., the flexible display 405 of FIG. 7) is disposed. The sound emission hole 413 may be configured to face outward (e.g., +Z2-axis direction) in the folding state, for example. The sound emission hole 413 may be provided to face the flexible display 405 with the inner space 414 of the first housing 410 interposed therebetween.

For example, the sound emission hole 413 may be configured to be disposed adjacent to the hinge (e.g., the hinge 240 of FIG. 3) in the rear surface (e.g., the second surface 210b of FIG. 3) of the first housing 410. The sound emission hole 413 may be configured to be disposed adjacent to, e.g., the hinge housing 471. The sound emission hole 413 may be configured to be disposed adjacent to, e.g., a portion of the side frame 411 where the side members 411a, 411b, and 411c are not formed. The sound emission hole 413 may be positioned between the hinge housing 471 and the battery 401 when the electronic device 400 is viewed from above in the Z2-axis direction.

For example, the sound emission hole 413 may be disposed near an end of the first housing 410 in the length direction (e.g., the Y2-axis direction). According to the invention, the sound emission hole 413 is disposed in a portion adjacent to the side surface of the first housing 410 farthest from the speaker 420. Thus, the speaker 420 may be disposed near the opposite end in the length direction (e.g., Y2-axis direction) of the first housing 410 where the sound emission hole 413 is not disposed. The sound emission hole 413 and the speaker 420 may be spaced apart from each other with the battery 401 and the substrate assembly 402 interposed therebetween.

For example, the sound emission hole 413 may be configured to come into contact with one of the edges of the rear cover 412. The sound emission hole 413 may be positioned to overlap a portion of the fourth edge 412d of the rear cover 412, for example. The sound emission hole 413 may be positioned, e.g., in a center portion between the first side member 411a and the third side member 411c, but is not limited thereto.

For example, a plurality of sound emission holes 413 may be provided in the rear surface (e.g., the second surface 210b of FIG. 3) of the first housing 410. The plurality of sound emission holes 413 may be configured to be disposed adjacent to the fourth edge 412d of the rear cover 412, for example. The plurality of sound emission holes 413 may be configured to be spaced apart from each other at intervals along the direction in which the fourth edge 412d extends, for example. The plurality of sound emission holes 413 may be disposed to be spaced apart at regular intervals, for example.

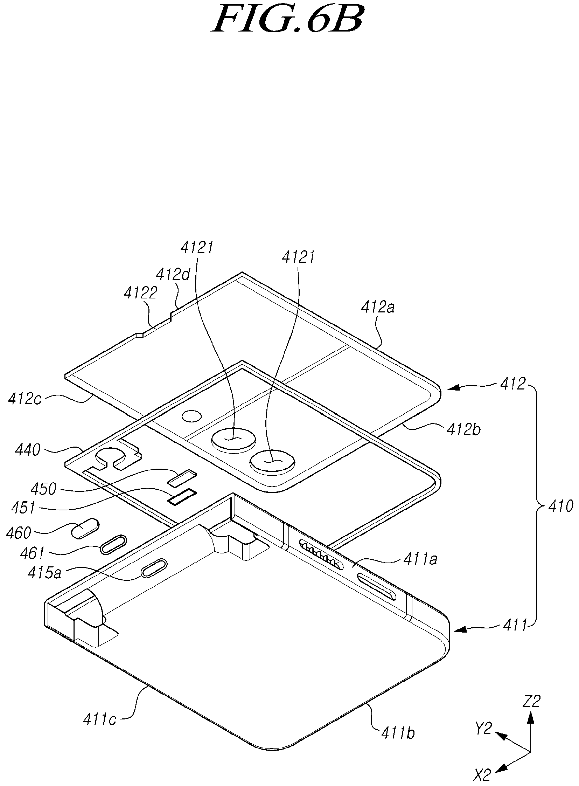

FIG. 6A is an exploded view illustrating a portion of a foldable electronic device according to an example embodiment. FIG. 6B is an exploded view illustrating a portion of a foldable electronic device according to an example embodiment. The exploded views of a portion of the foldable electronic device shown in FIGS. 6A and 6b are for illustrative purposes only, and the disclosure is not limited by the drawings.

For convenience of description, electronic components are omitted in FIGS. 6A and 6B. The exploded views of FIGS. 6A and 6B may be exploded views of the first housing 410 of the foldable electronic device 400 of FIGS. 4 and 5. Accordingly, descriptions of portions overlapping those described in FIGS. 4 and 5 are omitted.

The rear cover 412 may include at least one camera opening 4121. At least one camera opening 4121 may be formed in a position corresponding to at least one camera module 430. The camera opening 4121 may have a circular shape, but is not limited thereto. The camera opening 4121 may be disposed adjacent to, e.g., a corner portion where the second edge 412b and the third edge 412c contact each other, but is not limited thereto. A plurality of camera openings 4121 may be spaced apart from each other along the direction in which the third edge 412c extends (e.g., the Y2-axis direction), but is not limited thereto.

For example, the rear cover 412 may be coupled to the side frame 411 by an adhesive member 440. The adhesive member 440 may partially seal the space between the side frame 411 and the rear cover 412. The adhesive member 440 may include a waterproofing material. The adhesive member 440 may be, e.g., a waterproofing tape.

For example, the adhesive member 440 may be configured to be positioned between the side frame 411 and the rear cover 412. One surface of the adhesive member 440 may be configured to be adhered to at least a portion of the edges 412a, 412b, 412c, and 412d of the rear cover 412. The adhesive member 440 may be configured to surround at least a portion of the edges 412a, 412b, 412c, and 412d of the rear cover 412, for example. The other surface of the adhesive member 440 may be configured to be adhered to a portion of an upper portion of the side frame 411. At least a portion of the adhesive member 440 may be configured such that, e.g., the other surface is adhered to the vicinity of upper ends of the side members 411a, 411b, and 411c.

The electronic device (e.g., the foldable electronic device 400 of FIGS. 4 and 5) may omit the adhesive member 440. For example, when the side frame 411 and the rear cover 412 are integrally formed, the adhesive member 440 may be omitted. For example, when the rear cover 412 is coupled with the side frame 411 through press-fitting or fastening, the adhesive member 440 may be omitted.

For example, the electronic device 400 may include a waterproofing member 450. The waterproofing member 450 may be disposed in the opening 415b of the conduit (e.g., the conduit 415 of FIG. 7). The waterproofing member 450 may be disposed in an intermediate passage of the conduit 415, for example. The waterproofing member 450 may be, e.g., a mesh or a non-woven fabric, but is not limited thereto, and be formed of a material capable of preventing penetration of a foreign object, liquid or moisture introduced from the outside of the first housing 410 or reducing the likelihood of penetration. The waterproofing member 450 may be configured to prevent penetration, or reduce the likelihood of penetration, of a foreign object, liquid or moisture from the outside while allowing gas to pass therethrough. In other words, air (or gas) inside the first housing 410 may pass through the waterproofing member 450 and be discharged to the outside.

For example, the waterproofing member 450 may be adhered to a portion of the first housing 410 by a sealing member 451. One surface of the sealing member 451 may be adhered to a portion around the opening 415b of the conduit 415. The other surface of the sealing member 451 may be adhered to the edge portion of the waterproofing member 450.

For example, the electronic device 400 may include a blocking member 460. The blocking member 460 may be disposed in the opening 415a of the conduit (e.g., conduit 415 of FIG. 7). The blocking member 460 may be formed of, e.g., a material that does not pass air (or gas) as well as a foreign object, liquid or moisture of the first housing 410. The blocking member 460 may be any one polymer materials among, e.g., polyimide (PI), polycarbonate (PC), polyethersulphone (PES), polyethylene terephthalate (PET), polyethylene naphthalate (PEN), polyarylate (PAR), or fiber glass reinforced plastic (FRP), or other plastics. The blocking member 460 may be a component for preventing the leakage of sound passing through the conduit 415.

The configuration of the blocking member 460 in the electronic device 400 may be omitted. If no other opening (e.g., opening 415a) is formed between one end (e.g., one end 415c of FIG. 7), of the conduit 415, and the other end, of the conduit 415 (e.g., the other end 415d of FIG. 7), the configuration of the blocking member 460 may be omitted.

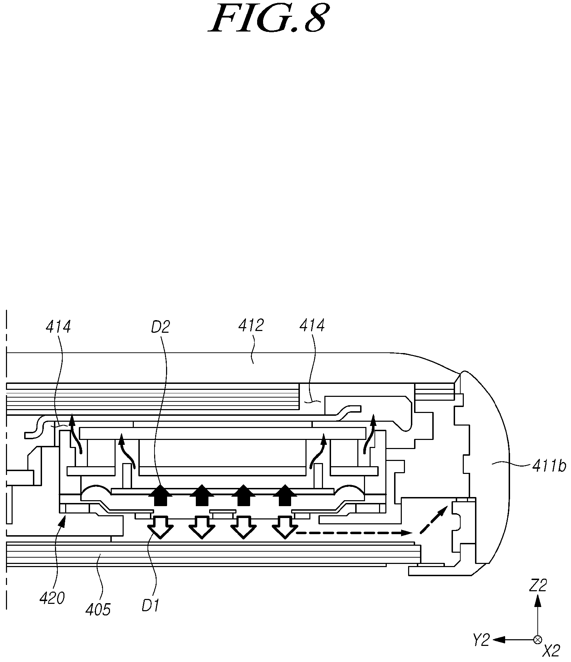

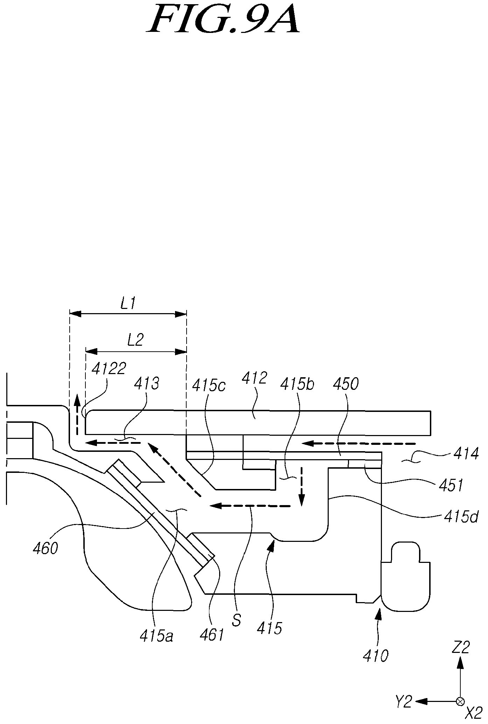

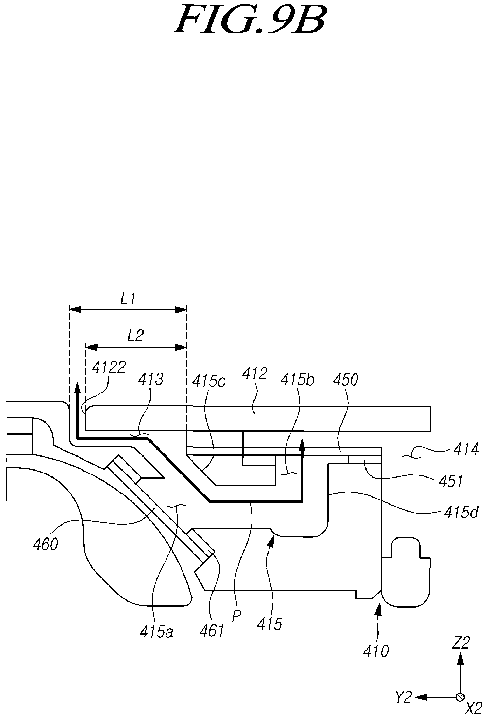

FIG. 7 is a cross-sectional view of the foldable electronic device of FIG. 4 taken along line VII-VII' in FIG. 4. FIG. 8 is an enlarged view of portion A of FIG. 7. FIGS. 9A and 9B are enlarged views of portion B of FIG. 7. The exploded views and enlarged views of a portion of the foldable electronic device shown in FIGS. 7 to 9B are for illustrative purposes only, and the disclosure is not limited by the drawings.

Since the components of FIGS. 7 to 9B having the same reference numerals as those assigned in FIGS. 4 to 6B are substantially the same or similar to each other, no duplicate description is given below.

Referring to FIGS. 7 and 8, the speaker 420 may output sound in a plurality of directions D1 and D2. The sound output intensity in a first output direction D1 (e.g., -Z2-axis direction) and the sound output intensity in a second output direction D2 (e.g., +Z2-axis direction) may be substantially the same. The first output direction D1 and the second output direction D2 may be substantially opposite to each other. The speaker outputs "front sound" in the first output direction D1 and "rear sound" in the second output direction D2.

For example, the speaker 420 may output sound in the first output direction D1 (e.g., -Z2-axis direction). The sound output in the first output direction D1 may be emitted through the opening formed in the side of the flexible display 405. The sound output in the first output direction D1 may be used to receive a call sound when the user makes a call in the unfolded state of the electronic device 200.

For example, the speaker 420 may output sound in the second output direction D2 (e.g., +Z2-axis direction). The sound may be a rear sound. The rear sound may be caused by the vibration generated from the rear surface when the speaker 420 outputs sound in the first output direction D1. The sound output in the second output direction D2 may be emitted through the opening (e.g., the sound emission hole 413) formed in the rear cover 412 side. The sound output in the second output direction D2 may move through an empty space within the inner space 414 of the first housing 410.

Referring to FIGS. 7, 9A, and 9B, the first housing 410 may include a conduit 415. The conduit 415 may constitute a part of the side frame 411, for example. For example, the conduit 415 may be formed integrally with the side frame 411, but is not limited thereto, and may be provided to be modularized and mounted on the side frame 411. The conduit 415 may be disposed adjacent to the hinge housing 471. The conduit 415 may be disposed in a position corresponding to the position of the sound emission hole 413. The first housing 410 may include a plurality of conduits 415 corresponding to the number of sound emission holes 413. The conduit 415 may be positioned between, e.g., the hinge housing 471 and the battery 401.

For example, the conduit 415 may guide the sound output from the speaker 420 to be emitted to the sound emission hole 413 through the inner space 414 of the first housing 410. For example, one end 415c of the conduit 415 may be connected to the sound emission hole 413. For example, the sound emission hole 413 may be formed at one end 415c of the conduit 415.

For example, the conduit 415 may include one end 415c, which is a portion through which sound is emitted, and the other end 415d, which is a portion through which sound, which has moved through the inner space 414 of the first housing 410, is introduced. One end 415c of the conduit 415 may be connected to the sound emission hole 413. The waterproofing member 450 may directly or indirectly contact the other end 415d of the conduit 415. An opening 415b through which sound is introduced may be provided at the other end 415d of the conduit 415.

For example, the rear sound output from the speaker 420 (e.g., the sound output in the second output direction D2) may be introduced through the empty space inside the first housing 410 to the opening 415d of the conduit 415. The sound introduced into the conduit 415 may pass through the inside of the conduit 415 and be discharged to the outside of the first housing 410 through the sound emission hole 413.

For example, the conduit 415 may have a substantially "U" shape in the cross section obtained by cutting the first housing 410 in the length direction (e.g., the Y2-axis direction). One end 415c and the other end 415d of the conduit 415 may be formed to face the rear cover 412. For example, one end 415c and the other end 415d of the conduit 415 may be formed to face in the rear direction (e.g., the +Z2-axis direction). However, this is exemplary and the conduit 415 may be formed in various shapes for guiding the travel of sound in the inner space 414 of the first housing 410.

For example, the waterproofing member 450 may be provided near the opening 415b formed at the other end 415d of the conduit 415. The waterproofing member 450 may be disposed to form a plane (e.g., Y2-Z2 plane) parallel to the rear cover 412. During the manufacturing process, the waterproofing member 450 may be adhered to the other end 415d of the conduit 415 in the upper/lower direction (or vertical direction) (e.g., Z2-axis direction) rather than an inclined direction. Accordingly, the manufacturing process may be simplified due to the shape of the conduit 415 and the disposition of the waterproofing member 450 as shown.

Referring to FIGS. 7, 9A, and 9B, a portion of the rear cover 412 may be disposed to cover a portion of the sound emission hole 413. A portion of the sound emission hole 413 may overlap a portion of the rear cover 412, for example. For example, a portion having an L2 length in an L1 length of the sound emission hole 413 in the Y2 direction may be closed by the rear cover 412. As a result, a portion of the sound emission hole 413 is covered by the rear cover 412 so that the area of the portion where sound is actually emitted may be reduced. Since a portion of the sound emission hole 413 is closed by the rear cover 412, the sound emission hole 413 may be seen as a thin slit from the outside. The sound emission hole 413 having a thin slit-shaped appearance is positioned in the slit recess 4122 of the fourth edge 412d, so that the sound emission hole 413 is seldom noticeable to the user. Therefore, the electronic device 400 may provide the sound emission hole 413 while maintaining the overall appearance of the first housing 410.

FIGS. 7 and 9A illustrate a path S where sound is introduced from the inner space 414 of the first housing 410, passes through the conduit 415, and is then discharged through the sound emission hole 413. The sound emission hole 413 may be emitted to the rear surface of the electronic device (e.g., the electronic device 400 of FIG. 4). For example, the sound generated by the speaker 420 may pass through the waterproofing member 450 and be discharged through the sound emission hole 413. Therefore, it is possible not to use the sound emission hole413 when the user makes a call in the unfolding state. When making a call in the folding state, the user receives the incoming call by taking the sound emission hole 413 close to the user's ear, thereby continuing the phone talk without any difficulty. By the structure of the sound emission hole 413 provided in the electronic device 400, the user may choose the unfolding state or folding state to her taste and make a call.

FIGS. 7 and 9B illustrate a path P where air (or gas) passes through the conduit 415 and moves in two directions. Since the waterproofing member 450 is formed of a material through which air (or gas) may penetrate as described above, air (or gas) may freely move in and out of the first housing 410. This structure may play a role to automatically discharge the internal air to the outside to adjust the sound pressure inside the first housing 410 when the speaker 420 operates. The electronic device 400 may adjust the sound pressure inside the first housing 410 generated by the speaker 420 with the structure of the sound emission hole 413, the conduit 415, and the waterproofing member 450, preventing damage to the speaker and other internal components. In the electronic device 400, the structure of the sound emission hole 413, the conduit 415, and the waterproofing member 450 performs the function of adjusting the sound pressure, so that the electronic device (e.g., the electronic device 400 of FIG. 4) may omit a separate structure for adjusting sound pressure, thereby achieving an enhanced manufacturing process and saving manufacturing costs.

According to various embodiments of the disclosure, since the waterproofing member 450 is formed of a material through which air (or gas) may penetrate as described above, air (or gas) may freely move in and out of the first housing 410. This structure may play a role to discharge the internal air to the outside to adjust the pressure inside the first housing 410.

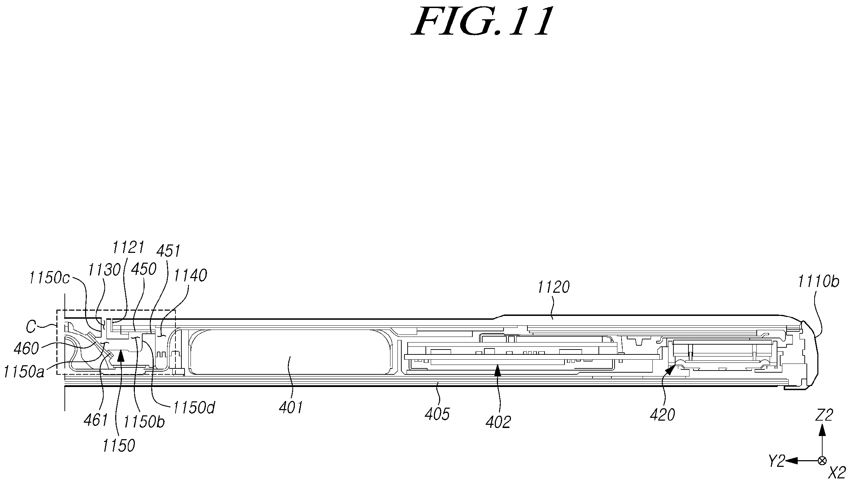

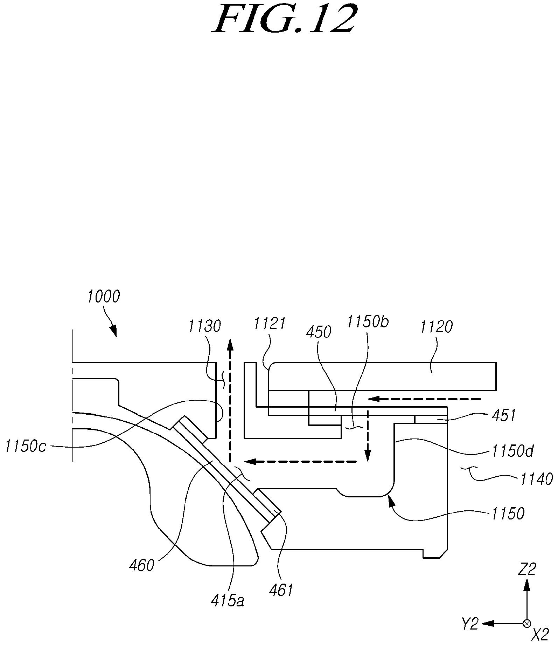

FIG. 10 is a plan view illustrating a foldable electronic device in a folding state according to an example embodiment. FIG. 11 is a cross-sectional view taken along line XI-XI' of FIG. 10. FIG. 12 is an enlarged view of portion C of FIG. 11. The foldable electronic device shown in FIGS. 10 to 12 is for illustrative purposes only, and the disclosure is not limited by the drawings.

Since the components of FIGS. 10 to 12 having the same reference numerals as those assigned in FIGS. 4 to 9B are substantially the same or similar to each other, no duplicate description is given below. Since the electronic device 1000 shown in FIGS. 10 to 12 has the same or similar structure as the electronic device 200 shown in FIGS. 2A to 3 and/or the electronic device 400 shown in FIGS. 4 to 9B as a whole, the components not shown or described in FIGS. 10 to 12 may be replaced with the components shown or described in FIGS. 2A to 9B. The embodiment described in FIGS. 10 to 12 may be used in combination with the embodiment(s) shown in FIGS. 4 to 9B.

The electronic device 1000 may include a first housing 1100. The description in connection with FIGS. 10 to 12 focuses primarily on the structure of the first housing 1100 but, without limitations thereto, the components of the first housing 1100 described below may also be implemented in another housing.

The first housing 1100 may include a side frame 1110. The side frame 1110 may include a first side member 1110a, a second side member 1110b, and/or a third side member 1110c. The first side member 1110a may have a first length along a first length direction (e.g., Y2-axis direction). The second side member 1110b may extend from the first side member 1110a in a substantially vertical direction (e.g., the X2-axis direction). The second side member 1110b may extend to have a second length equal to or different from the first length. The third side member 1110c may extend from the second side member 1110b in a substantially vertical direction (e.g., the Y2-axis direction). The third side member 1110c may extend in a direction substantially parallel to the first side member 1110a. The third side member 1110c may have a first length along the first direction (e.g., Y2-axis direction).

The first housing 1100 may include the sound emission hole 1130. The sound emission hole 1130 may be formed, e.g., in the side frame 1110. Since the description of the position of the sound emission hole 1130 is substantially the same as the position of the sound emission hole 413 described in FIGS. 4 and 5, the description is omitted below.

For example, an upper portion (e.g., end in the +Z2-axis direction) of the sound emission hole 1130 may be positioned on the same plane as the outer surface (e.g., surface in the +Z2-axis direction) of the rear cover 1120 or may protrude outward (e.g., +Z2-axis direction) beyond the rear cover 1120. As a result, the user may easily identify the presence and position of the sound emission hole 1130.

The first housing 1100 may include a conduit 1150. The conduit 1150 may be disposed in a position corresponding to the position of the sound emission hole 1130. For example, the conduit 1150 may include one end 1150c, which is a portion through which sound is emitted, and the other end 1150d, which is a portion through which sound, which has moved through the inner space 1140 of the first housing 1100, is introduced. One end 1150c of the conduit 1150 may be connected to the sound emission hole 1130. The waterproofing member 450 may directly or indirectly contact the other end 1150d of the conduit 1150. An opening 1150b through which sound is introduced may be provided at the other end 1150d of the conduit 1150.

For example, the conduit 1150 may have a substantially "U" shape in the cross section obtained by cutting the first housing 1100 in the length direction (e.g., the Y2-axis direction). One end 1150c and the other end 1150d of the conduit 1150 may be formed to face the rear cover 1120. For example, one end 1150c and the other end 1150d of the conduit 1150 may be formed to face in the rear direction (e.g., the +Z2-axis direction). However, this is exemplary and the conduit 1150 may be formed in various shapes for guiding the travel of sound in the inner space 1140 of the first housing 1100. For example, a portion of the conduit 1150 may be positioned on the same plane as the rear cover 1120. For example, at least a portion of one end 1150c of the conduit 1150 may be positioned on the same plane as the rear cover 1120.

The first housing 1100 may include a rear cover 1120. The rear cover 1120 may be defined by a first edge 1120a, a second edge 1120b, a third edge 1120c and/or a fourth edge 1120d. The first edge 1120a may be, e.g., a portion positioned corresponding to the first side member 1110a. The second edge 1120b may be, e.g., a portion positioned corresponding to the second side member 1110b. The third edge 1120c may be, e.g., a portion positioned corresponding to the third side member 1110c. For example, the fourth edge 1120d may be a portion positioned corresponding to the hinge housing (e.g., the hinge housing 471 of FIG. 4).

As an example, the rear cover 1120 may include a recess 1121. The recess 1121 may be formed in the fourth edge 1120d. The recess 1121 may be formed by digging a portion of the fourth edge 1120d inward. The recess 1121 may be formed in a position corresponding to the sound emission hole 1130, for example. The recess 1121 may be concave to a depth sufficient for the user to easily identify the shape of the recess 1121. The recess 1121 may be, e.g., a concave recess having a greater depth than the slit recess 4122 of FIG. 4. Due to the recess 1121, the rear cover 1120 may be disposed not to overlap the sound emission hole 1130.

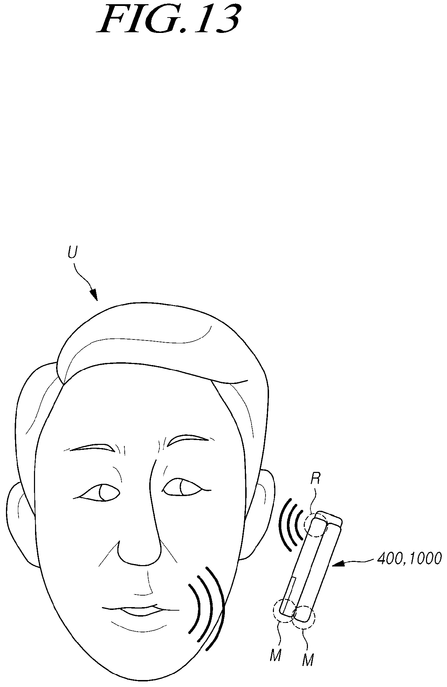

FIG. 13 is a view illustrating a use example of a foldable electronic device according to an example embodiment.

According to various embodiments of the disclosure, in the folding state, the user U may select a speaker phone mode or a receive mode to make a call. When the receive mode is selected in the folding state, the user U takes the receiver R positioned on the back of the foldable electronic device (e.g., the electronic device 400 of FIG. 4 or the electronic device 1000 of FIG. 10) to her ear to make a call. When the user U takes the receiver R to the ear, the voice input device M receiving the user U's voice may be naturally positioned adjacent to the user U's mouth. Here, the receiver R may be the sound emission hole 413 described with reference to FIGS. 4 to 9B or the sound emission hole 1130 described with reference to FIGS. 10 to 12. Here, the voice input device M may be a device that receives sound power when making a call in the receive mode in the unfolding state.

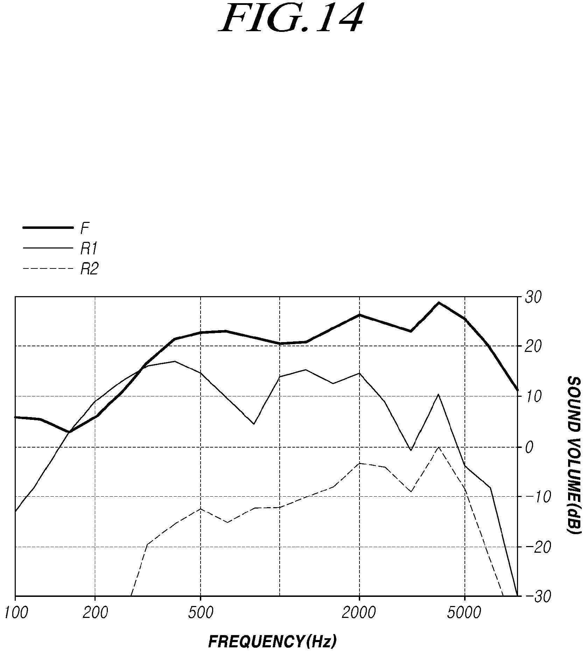

FIG. 14 is a graph illustrating the performance of a speaker provided in a foldable electronic device according to an example embodiment. The graph shown in FIG. 14 is for illustrative purposes only, and the disclosure is not limited by the data displayed in the graph.

FIG. 14 is a graph for comparing sound volume performances according to frequencies of the sound emission hole (e.g., the sound emission hole 413 of FIG. 4 or the sound emission hole 1130 of FIG. 10) formed in the rear surface of the electronic device (e.g., the electronic device 400 of FIG. 4 or the electronic device 1000 of FIG. 10). The horizontal axis of the graph is frequency, and the unit is Hz. The vertical axis of the graph is sound volume, and the unit is dB. Line F of the graph may refer to the sound volume generated from the receiver used when the user makes a call in the unfolding state of the electronic device 400 or 1000. Line R1 of the graph may refer to the sound volume generated by the user from the sound emission hole 413 or 1130 of the electronic device 400 or 1000. Line R2 of the graph may refer to the sound volume transferred to the user when the user makes a call as shown in FIG. 13 in the folding state of the conventional foldable electronic device.

From comparison between line F and line R2, it may be identified that in the conventional electronic device, sound volume is sharply deteriorated when the user makes a call in the receive mode in the folding state of the electronic device. In contrast, from comparison between line R1 and line R2, it may be identified that in the proposed electronic device 400 or 1000, the intensity of sound volume is significantly enhanced when the user makes a call in the receive mode in the folding state.

For example, a difference of more than 20 dB may occur between the receiving loudness rating of R1 and the receiving loudness rating of R2. Here, the receiving loudness rating (RLR) may refer to the intensity value of the sound volume that may be perceived through the receiver's ear. The electronic device 400 or 1000 proposed in various embodiments of the disclosure may exhibit a better call volume and quality, as transferred to the receiver, than the conventional electronic device, when the user makes a call in the receive mode in the folding state.

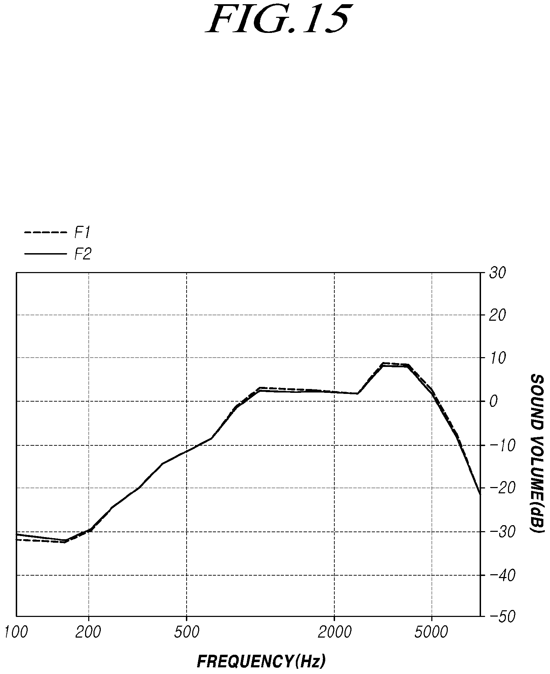

FIG. 15 is a graph illustrating the performance of a speaker provided in a foldable electronic device according to an example embodiment. The graph shown in FIG. 15 is for illustrative purposes only, and the disclosure is not limited by the data displayed in the graph.

FIG. 15 is a graph for identifying what effect the sound emission hole (e.g., the sound emission hole 413 of FIG. 4 or the sound emission hole 1130 of FIG. 10) formed in the rear surface of the electronic device (e.g., the electronic device 400 of FIG. 4 or the electronic device 1000 of FIG. 10) has on the sound quality of the two-way stereo speaker (e.g., the output device 201 positioned at the end in the +Y1-axis direction in FIG. 3 and the output device 202 positioned at the end in the -Y1-axis direction). The horizontal axis of the graph is frequency, and the unit is Hz. The vertical axis of the graph is sound volume, and the unit is dB. Line F1 of the graph may refer to the sound volume generated from the two-way stereo speaker used when the user makes a call in the unfolding state of the electronic device 400 or 1000 having the sound emission hole 413 or 1130. Line F2 of the graph may refer to the sound volume generated from the two-way stereo speaker used when the user makes a call in the unfolding state of the conventional electronic device without the sound emission hole 413 or 1130.

Comparison between line F1 and line F2 reveals that in the frequency range (e.g., 200Hz to 5,000Hz) necessary for the call, although the sound emission hole 413 or 1130 is additionally formed, no substantial effect may be had on the quality of the sound generated from the conventional receiver. In other words, although the sound emission hole 413 or 1130 is additionally configured in the rear surface of the electronic device 400 or 1000, the sound quality of the receiver provided on the front surface of the conventional electronic device 400 or 1000 may not be deteriorated.

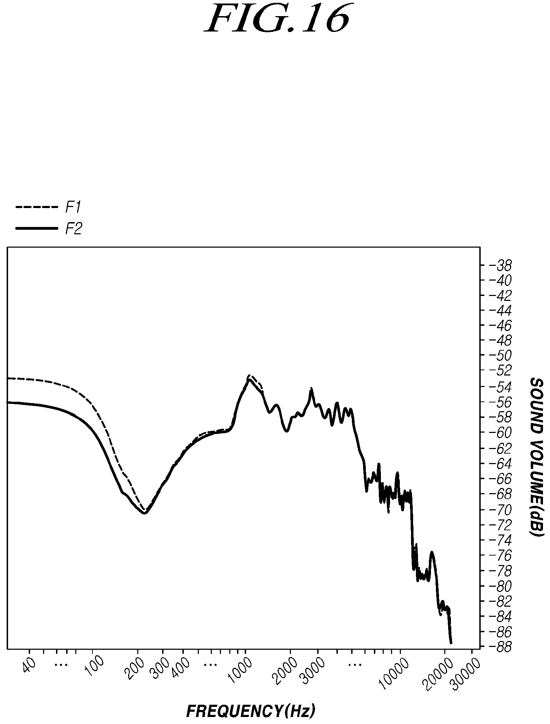

FIG. 16 is a graph illustrating the performance of a speaker provided in a foldable electronic device according to an example embodiment. The graph shown in FIG. 16 is for illustrative purposes only, and the disclosure is not limited by the data displayed in the graph.

FIG. 16 is a graph for identifying what effect the sound emission hole (e.g., the sound emission hole 413 of FIG. 4 or the sound emission hole 1130 of FIG. 10) formed in the rear surface of the electronic device (e.g., the electronic device 400 of FIG. 4 or the electronic device 1000 of FIG. 10) has on the sound quality of the two-way stereo speaker (e.g., the output device 201 positioned at the end in the +Y1-axis direction in FIG. 3 and the output device 202 positioned at the end in the -Y1-axis direction) used for the user to hear sound in large volume, such as music or functional sounds, such as notifications, in the unfolding state of the electronic device 400 or 1000. The horizontal axis of the graph is frequency, and the unit is Hz. The vertical axis of the graph is sound volume, and the unit is dB. Line F1 of the graph may refer to the sound volume generated from the stereo speaker of the electronic device 400 or 1000 having the sound emission hole 413 or 1130 by the user. Line F2 of the graph may refer to the sound volume generated from the stereo speaker of the conventional electronic device without the sound emission hole 413 or 1130.

Comparison between line F1 and line F2 reveals that in the frequency range from 200Hz to 20,000Hz, although the sound emission hole 413 or 1130 is additionally formed, no substantial effect may be had on the quality of the sound generated from the conventional stereo speaker. In other words, although the sound emission hole 413 or 1130 is additionally configured in the rear surface of the electronic device 400 or 1000, the sound quality of the stereo speaker provided in the conventional electronic device 400 or 1000 may not be deteriorated.

Each embodiment of the disclosure may be used in combination with other embodiments.

According to an embodiment, an electronic device (e.g., the electronic device 200 of FIG. 2A, the electronic device 400 of FIG. 4, or the electronic device 1000 of FIG. 10) comprises a housing including a first housing (e.g., the first housing 210 of FIG. 2A, the first housing 410 of FIG. 4, or the first housing 1100 of FIG. 10) and a second housing (e.g., the second housing 220 of FIG. 2A), a hinge (e.g., the hinge 240 of FIG. 3) rotatably connecting the first housing 210, 410, or 1100 and the second housing 220, and a speaker (e.g., the speaker 420 of FIG. 5) received in the first housing 210, 410, or 1100. The first housing 210, 410, or 1100 may include, in a rear surface (e.g., the second surface 210b of FIG. 3), a sound emission hole (e.g., the sound emission hole 413 of FIG. 4 or the sound emission hole 1130 of FIG. 10) configured to emit a rear sound generated from the speaker 420. It thus becomes possible to increase the number of points of the electronic device 200 potentially emitting sound. A single speaker can be used to emit sound in multiple areas of the electronic device 200, e.g. areas disposed on opposite sides of a housing, e.g. the first housing 210. This makes it possible to offer multiple ways of using, e.g. holding, the electronic device 200 when making or receiving a phone call. Specifically, the user can use the electronic device 200 in an unfolded state and bring her ear close to a part of the electronic device 200 where "front sound" of a speaker is emitted, or the user can choose to use the electronic device 200 in a folded state and bring her ear close to an area of the electronic device where "rear sound" of a speaker, and especially of the same speaker emitting the "front sound", is emitted. Said area may be the area where the sound emission hole is located.

According to an embodiment, the sound emission hole 413 or 1130 configured to be positioned in a portion adjacent to the hinge 240. This arrangement maximizes the distance between the sound emission hole 413 and a typical position of a microphone. The user may therefore have good sending and receiving sound quality when holding the sound emission hole 413 close to her ear. Naturally, the microphone will then be close to the user's mouth.

According to an embodiment, the sound emission hole 413 or 1130 may be configured to face outward in a folding state of the electronic device.

According to an embodiment, the first housing 210, 410, or 1100 may include an inner space (e.g., the inner space 414 of FIG. 5 or the inner space 1140 of FIG. 11) configured to transfer the sound from the speaker 420 to the sound emission hole 413 or 1130. This makes it possible to guide the rear sound inside the first housing 210, 410, 1100 to the sound emission hole 413 or 1130, thereby reducing losses in sound intensity and thus improving sound quality.

According to an embodiment, the electronic device 400 or 1000 may include a conduit (e.g., the conduit 415 of FIG. 7 or the conduit 1150 of FIG. 11) configured to guide the sound output from the speaker 420 through the inner space 414 or 1140 of the first housing 410 or 1100 to be emitted to the sound emission hole 413 or 1130 and having one end (e.g., the end 415c of FIG. 7 or the end 1150c of FIG. 11) connected with the sound emission hole 413 or 1130. Such a conduit improves the guiding of the sound from the speaker 420 to the sound emission hole 413 or 1130.

According to an embodiment, the electronic device 400 or 1000 may comprise a waterproofing member 450 provided to prevent a foreign body or liquid from entering the first housing 410, or 1100 from the sound emission hole 413 or 1130. According to an embodiment, the sound generated by the speaker 420 and especially the rear sound generated by the speaker 420 may pass through the waterproofing member 450 and be emitted through the sound emission hole 413 or 1130.

According to an embodiment, the waterproofing member 450 may be formed to allow gas to pass therethrough. According to an embodiment, in the electronic device 400 or 1000, an internal pressure of the first housing 410 or 1100 may be adjusted as the gas inside the first housing 410 or 1100 passes through the waterproofing member 450. It is then not necessary to provide another means for adjusting an internal pressure of the electronic device 200 or the first housing 410 or 1100.

According to an embodiment, the first housing 410 or 1100 may include a rear cover 412 or 1120 disposed on the rear surface. According to an embodiment, the waterproofing member 450 may be configured to be disposed parallel to a plane formed by the rear cover 412 or 1120.

According to an embodiment, the electronic device 200, 400, or 1000 may comprise a display 230 or 405 disposed over the first housing 210, 410, or 1100, the hinge 240, and the second housing 220. According to an embodiment, the speaker 420 may be configured to emit the rear sound in a first direction (e.g., the first direction D1 of FIG. 8) which is a direction to a side of the display 230 or 405 and a second direction (e.g., the second direction D2 of FIG. 8) opposite to the first direction D1.

According to an embodiment, the sound emitted in the first direction D1 may be emitted to an outside through an opening in a direction to the side of the display 230 or 405. The second direction D2 may then form an angle of, for example, 90 degrees or 180 degrees with the first direction D1. Because of the various ways of guiding the sound inside the first housing 410 or 1100, it is possible to guide the rear sound of the speaker 420 to a desired surface of the electronic device 200.

According to an embodiment, the electronic device 200, 400, or 1000 may comprise a display 230 or 405 disposed over the first housing 210, 410, or 1100, the hinge 240, and the second housing 220. According to an embodiment, the sound emission hole 413 or 1130 may be provided in a surface opposite to the display 230 or 405. Since the display 230 or 405 is usually not visible in a folded state, the sound emission hole therefore usually is then arranged on a surface which is visible in a folded state of the electronic device 200.

According to an embodiment, the first housing 410 or 1100 may include a rear cover 412 or 1120 disposed on the rear surface. According to an embodiment, the rear cover 412 or 1120 may include an opening formed in a position corresponding to the sound emission hole 413 or 1130.

According to an embodiment, the first housing 410 or 1100 may include a rear cover 412 or 1120 disposed on the rear surface. According to an embodiment, the rear cover 412 or 1120 may include a recess 4122 or 1121 formed in an edge adjacent to the sound emission hole 413 or 1130 to open the sound emission hole 413 or 1130.

According to an embodiment, the first housing 410 may include a rear cover 412 disposed on the rear surface. According to an embodiment, the rear cover 412 may be disposed so that a portion of the rear cover 412 overlaps a portion of the sound emission hole 413.

According to an embodiment, the speaker 420 may be configured to be received in a portion adjacent to a side surface of the first housing 410 or 1100 farthest from the sound emission hole 413 or 1130 or the hinge. The area adjacent to the hinge can then be used as a telephone receiver area in a folded state of the electronic device 200, while the area where the speaker 420 is actually arranged and where the front sound is emitted can be used as a telephone receiver area in an unfolded state of the electronic device 200.

According to an embodiment, an electronic device 200, 400, or 1000 may comprise a first housing 210, 410, or 1100 having a sound emission hole 413 or 1130 to emit a rear sound from an internal speaker 420, a second housing 220, and a hinge 240 rotatably connected with the first housing 210, 410, or 1100 and the second housing 220. According to an embodiment, one side of the sound emission hole 413 or 1130 may be opened in a surface exposed to an outside of the first housing 210, 410, or 1100 in a folded state of the first housing 210, 410, or 1100 and the second housing 220 by the hinge 240.

According to an embodiment, an inner space 414 or 1140 serving as a path through which the rear sound is to be transferred may be provided in the first housing 210, 410, or 1100.

According to an embodiment, the first housing 210, 410, or 1100 may include a conduit 415 or 1150 that connects another side of the sound emission hole 413 or 1130 with the inner space 414 or 1140 to guide the rear sound transferred through the inner space 414 or 1140 to the sound emission hole 413 or 1130.

According to an embodiment, the conduit 415 or 1150 may include a member 450 to block a foreign body from entering the inner space 414 or 1140 and prevent disturbance to a flow of the rear sound from the inner space 414 or 1140 to the sound emission hole 413 or 1130.

According to an embodiment, one side of the sound emission hole 413 or 1130 may be opened in a portion adjacent to the hinge 240.

According to an embodiment, a plurality of sound emission holes 413 or 1130 may be provided in the rear surface of the first housing 210, 410, or 1100.

According to an embodiment, the first housing 210, 410, or 1100 may include a plurality of conduits 415 or 1150 corresponding to the number of sound emission holes 413 or 1130.

According to an embodiment, the sound emission hole 413 or 1130 may be configured to be disposed adjacent to the hinge 240 in the rear surface of the first housing 210, 410, or 1100.

According to an embodiment, the speaker 420 may be disposed near the opposite end in the length direction of the first housing 210, 410 or 1100 where the sound emission hole 413 or 1130 is not disposed.

According to an embodiment, a blocking member 460, which may be disposed in the opening of a conduit 415 or 1150 which may connect a rear side of the speaker 420 and a sound emission hole 413 or 1130 may be formed of, e.g., a material that does not pass air (or gas) as well as a foreign object, liquid or moisture.

According to an embodiment, a conduit 415 or 1150, which may connect a rear side of the speaker 420 and a sound emission hole 413 or 1130, may have a substantially "U" shape in the cross section obtained by cutting in the length direction of the first housing 210, 410, or 1100.

According to an embodiment, a portion of the sound emission hole 413 or 1130 may be covered by the rear cover 412 or 1120 so that the area of the portion where sound is actually emitted may be reduced. Since a portion of the sound emission hole 413 or 1130 is then closed by the rear cover 412 or 1120, the sound emission hole 413 or 1130 may be seen as a thin slit from the outside. The sound emission hole 413 or 1130 having a thin slit-shaped appearance may be positioned in a slit recess of a fourth edge 412d or 1120d of the first housing 210, 410, or 1100, so that the sound emission hole is seldom noticeable to the user.

According to an embodiment, the sound emission hole 413 or 1130 may be formed, in a side frame 211, 411, or 1110 of the first housing 210, 410, or 1100.

The terms as used herein are provided merely to describe some embodiments thereof, but are not intended to limit the disclosure. As used herein, the singular forms "a," "an," and "the" are intended to include the plural forms as well, unless the context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, the term 'and/or' should be understood as encompassing any and all possible combinations by one or more of the enumerated items. As used herein, the terms "include," "have," and "comprise" are used merely to designate the presence of the feature, component, part, or a combination thereof described herein, but use of the term does not exclude the likelihood of presence or adding one or more other features, components, parts, or combinations thereof. As used herein, the terms "first" and "second" may modify various components regardless of importance and/or order and are used to distinguish a component from another without limiting the components.

As used herein, the terms "configured to" may be interchangeably used with the terms "suitable for," "having the capacity to," "designed to," "adapted to," "made to," or "capable of" depending on circumstances. The term "configured to" does not essentially mean "specifically designed in hardware to." Rather, the term "configured to" may mean that a device can perform an operation together with another device or parts. For example, a 'device configured (or set) to perform A, B, and C' may be a dedicated device to perform the corresponding operation or may mean a general-purpose device capable of various operations including the corresponding operation.

Meanwhile, the terms "upper side", "lower side", and "front and rear directions" used in the disclosure are defined with respect to the drawings, and the shape and position of each component are not limited by these terms.

In the disclosure, the above-described description has been made mainly of specific embodiments, but the disclosure is not limited to such specific embodiments, but should rather be appreciated as covering all various modifications and/or substitutes of various embodiments.

## Claims

1. An electronic device (200, 400, or 1000), comprising:
a housing including a first housing (210, 410, or 1100) and a second housing (220);
a hinge (240) rotatably connecting the first housing (210, 410, or 1100) and the second housing (220); and
a speaker (420) received in the first housing (210, 410, or 1100) and configured to output a front sound and a rear sound,
wherein the first housing (210, 410, or 1100) includes a sound emission hole (413 or 1130) configured to emit a rear sound generated from the speaker (420) and disposed in a rear surface of the first housing (210, 410, or 1100),
wherein the sound emission hole (413) is disposed in a portion adjacent to the side surface of the first housing (410) farthest from the speaker(420).

2. The electronic device of claim 1, wherein the sound emission hole (413 or 1130) is configured to be positioned in a portion adjacent to the hinge (240).

3. The electronic device of claim 1 or 2, wherein the sound emission hole (413 or 1130) is opened outward of the first housing (210, 410, or 1100) in a folding state of the electronic device by the hinge (240).

4. The electronic device of one of the aforementioned claims, wherein the first housing (210, 410, or 1100) includes an inner space (414 or 1140) configured to transfer the rear sound to the sound emission hole (413 or 1130).

5. The electronic device of one of the aforementioned claims , further comprising a conduit (415 or 1150) having one end (415c or 1150c) connected with the sound emission hole (413 or 1130) to guide the rear sound to the sound emission hole (413 or 1130).

6. The electronic device of one of the aforementioned claims, further comprising a waterproofing member (450) provided to prevent a foreign body from entering the first housing (410, or 1100) from the sound emission hole (413 or 1130),
wherein the rear sound is emitted through the waterproofing member (450) to the sound emission hole (413 or 1130), wherein the waterproofing member (450) is formed to allow a gas to pass therethrough, and
wherein an internal pressure of the first housing (410 or 1100) is adjusted as the gas inside the first housing (410 or 1100) passes through the waterproofing member (450).

7. The electronic device of one of the aforementioned claims , further comprising a display (230 or 405) disposed over the first housing (210, 410, or 1100), the hinge (240), and the second housing (220), and
wherein the speaker (420) is configured to emit the rear sound in a first direction (D1) which is a direction to the display (230 or 405) and a second direction (D2) opposite to the first direction (D1).

8. The electronic device of one of the aforementioned claims , further comprising a display (230 or 405) disposed over the first housing (210, 410, or 1100), the hinge (240), and the second housing (220), and
wherein the sound emission hole (413 or 1130) is provided in a surface opposite to the display (230 or 405).

9. The electronic device of one of the aforementioned claims , wherein the first housing (410 or 1100) includes a rear cover (412 or 1120), and
wherein the rear cover (412 or 1120) includes an opening formed in a position corresponding to the sound emission hole (413 or 1130), or wherein the rear cover (412 or 1120) includes a recess (4122 or 1121) formed in an edge adjacent to the sound emission hole (413 or 1130) to open the sound emission hole (413 or 1130).

10. The electronic device of one of the aforementioned claims , wherein the first housing (410) includes a rear cover (412), and
wherein the rear cover (412) is disposed so that a portion of the rear cover (412) overlaps a portion of the sound emission hole (413).

11. The electronic device of one of the aforementioned claims , wherein the speaker (420) is configured to be received in a portion adjacent to a side surface of the first housing (410 or 1100) farthest from the sound emission hole (413 or 1130) or the hinge (240).

12. The electronic device of one of the aforementioned claims,
wherein one side of the sound emission hole (413 or 1130) is opened in a surface exposed to an outside of the first housing (210, 410, or 1100) in a folded state of the first housing (210, 410, or 1100) and the second housing (220) by the hinge (240).

13. The electronic device of claim 12, wherein an inner space (414 or 1140) serving as a path through which the rear sound is to be transferred is provided in the first housing (210, 410, or 1100).

14. The electronic device of claim 12 or 13, wherein the first housing (210, 410, or 1100) includes a conduit (415 or 1150) that connects another side of the sound emission hole (413 or 1130) with the inner space (414 or 1140) to guide the rear sound transferred through the inner space (414 or 1140) to the sound emission hole (413 or 1130).

15. The electronic device of claim 14, wherein the conduit (415 or 1150) includes a member (450) to block a foreign body from entering the inner space (414 or 1140) and prevent disturbance to a flow of the rear sound from the inner space (414 or 1140) to the sound emission hole (413 or 1130).

## Patentansprüche

1. Elektronische Vorrichtung (200, 400 oder 1000), umfassend:
ein Gehäuse, das ein erstes Gehäuse (210, 410 oder 1100) und ein zweites Gehäuse (220) umfasst;
ein Scharnier (240), das das erste Gehäuse (210, 410 oder 1100) und das zweite Gehäuse (220) drehbar verbindet; und
einen Lautsprecher (420), der im ersten Gehäuse (210, 410 oder 1100) aufgenommen ist und konfiguriert ist, um einen vorderen Schall und einen rückwärtigen Schall auszugeben,
wobei das erste Gehäuse (210, 410 oder 1100) ein Schallemissionsloch (413 oder 1130) enthält, das konfiguriert ist, um einen vom Lautsprecher (420) erzeugten rückwärtigen Schall zu emittieren, und in einer Rückfläche des ersten Gehäuses (210, 410 oder 1100) angeordnet ist,
wobei das Schallemissionsloch (413) in einem Abschnitt benachbart zur Seitenfläche des ersten Gehäuses (410) angeordnet ist, der am weitesten vom Lautsprecher (420) entfernt ist.

2. Elektronische Vorrichtung nach Anspruch 1, wobei das Schallemissionsloch (413 oder 1130) konfiguriert ist, um in einem Abschnitt benachbart zum Scharnier (240) positioniert zu sein.

3. Elektronische Vorrichtung nach Anspruch 1 oder 2, wobei das Schallemissionsloch (413 oder 1130) in einem Faltzustand der elektronischen Vorrichtung durch das Scharnier (240) vom ersten Gehäuse (210, 410 oder 1100) nach außen hin geöffnet ist.

4. Elektronische Vorrichtung nach einem der vorgenannten Ansprüche, wobei das erste Gehäuse (210, 410 oder 1100) einen Innenraum (414 oder 1140) enthält, der konfiguriert ist, um den rückwärtigen Schall zum Schallemissionsloch (413 oder 1130) zu übertragen.

5. Elektronische Vorrichtung nach einem der vorgenannten Ansprüche, ferner umfassend eine Leitung (415 oder 1150), deren eines Ende (415c oder 1150c) mit dem Schallemissionsloch (413 oder 1130) verbunden ist, um den rückwärtigen Schall zum Schallemissionsloch (413 oder 1130) zu leiten.

6. Elektronische Vorrichtung nach einem der vorgenannten Ansprüche, ferner umfassend ein wasserabdichtendes Element (450), das vorgesehen ist, um zu verhindern, dass ein Fremdkörper vom Schallemissionsloch (413 oder 1130) aus in das erste Gehäuse (410 oder 1100) eindringt,
wobei der rückwärtige Schall durch das wasserabdichtende Element (450) zum Schallemissionsloch (413 oder 1130) emittiert wird, wobei das wasserabdichtende Element (450) so ausgebildet ist, dass ein Gas durch es hindurch strömen kann, und
wobei ein Innendruck des ersten Gehäuses (410 oder 1100) eingestellt wird, wenn das Gas innerhalb des ersten Gehäuses (410 oder 1100) durch das wasserabdichtende Element (450) strömt.

7. Elektronische Vorrichtung nach einem der vorgenannten Ansprüche, ferner umfassend eine Anzeige (230 oder 405), die über dem ersten Gehäuse (210, 410 oder 1100), dem Scharnier (240) und dem zweiten Gehäuse (220) angeordnet ist, und
wobei der Lautsprecher (420) so konfiguriert ist, dass er den rückwärtigen Schall in eine erste Richtung (D1), die eine Richtung zur Anzeige (230 oder 405) ist, und in eine zweite Richtung (D2), die der ersten Richtung (D1) entgegengesetzt ist, emittiert.

8. Elektronische Vorrichtung nach einem der vorgenannten Ansprüche, ferner umfassend eine Anzeige (230 oder 405), die über dem ersten Gehäuse (210, 410 oder 1100), dem Scharnier (240) und dem zweiten Gehäuse (220) angeordnet ist, und
wobei das Schallemissionsloch (413 oder 1130) in einer der Anzeige (230 oder 405) gegenüberliegenden Oberfläche vorgesehen ist.

9. Elektronische Vorrichtung nach einem der vorgenannten Ansprüche, wobei das erste Gehäuse (410 oder 1100) eine hintere Abdeckung (412 oder 1120) enthält, und
wobei die hintere Abdeckung (412 oder 1120) eine Öffnung enthält, die an einer Position ausgebildet ist, die dem Schallemissionsloch (413 oder 1130) entspricht, oder wobei die hintere Abdeckung (412 oder 1120) eine Ausnehmung (4122 oder 1121) enthält, die in einer Kante benachbart zum Schallemissionsloch (413 oder 1130) ausgebildet ist, um das Schallemissionsloch (413 oder 1130) zu öffnen.

10. Elektronische Vorrichtung nach einem der vorgenannten Ansprüche, wobei das erste Gehäuse (410) eine hintere Abdeckung (412) enthält, und
wobei die hintere Abdeckung (412) so angeordnet ist, dass ein Abschnitt der hinteren Abdeckung (412) einen Abschnitt des Schallemissionslochs (413) überlappt.

11. Elektronische Vorrichtung nach einem der vorgenannten Ansprüche, wobei der Lautsprecher (420) so konfiguriert ist, dass er in einem Abschnitt aufgenommen ist, der benachbart zu einer Seitenfläche des ersten Gehäuses (410 oder 1100) ist, die am weitesten vom Schallemissionsloch (413 oder 1130) oder vom Scharnier (240) entfernt ist.

12. Elektronische Vorrichtung nach einem der vorgenannten Ansprüche,
wobei eine Seite des Schallemissionslochs (413 oder 1130) in einer Oberfläche geöffnet ist, die in einem gefalteten Zustand des ersten Gehäuses (210, 410 oder 1100) und des zweiten Gehäuses (220) durch das Scharnier (240) zu einer Außenseite des ersten Gehäuses (210, 410 oder 1100) hin freiliegt.

13. Elektronische Vorrichtung nach Anspruch 12, wobei im ersten Gehäuse (210, 410 oder 1100) ein Innenraum (414 oder 1140) vorgesehen ist, der als Pfad dient, durch den der rückwärtige Schall zu übertragen ist.

14. Elektronische Vorrichtung nach Anspruch 12 oder 13, wobei das erste Gehäuse (210, 410 oder 1100) eine Leitung (415 oder 1150) enthält, die eine andere Seite des Schallemissionslochs (413 oder 1130) mit dem Innenraum (414 oder 1140) verbindet, um den durch den Innenraum (414 oder 1140) übertragenen rückwärtigen Schall zum Schallemissionsloch (413 oder 1130) zu leiten.

15. Elektronische Vorrichtung nach Anspruch 14, wobei die Leitung (415 oder 1150) ein Element (450) enthält, um zu verhindern, dass ein Fremdkörper in den Innenraum (414 oder 1140) eindringt, und um zu verhindern, dass ein Fluss des rückwärtigen Schalls aus dem Innenraum (414 oder 1140) zum Schallemissionsloch (413 oder 1130) gestört wird.

## Revendications

1. Dispositif électronique (200, 400 ou 1000), comprenant :
un boîtier (210) comprenant un premier boîtier (210, 410 ou 1100) et un deuxième boîtier (220) ;
une charnière (240) reliant de manière rotative le premier boîtier (210, 410 ou 1100) et le deuxième boîtier (220) ; et
un haut-parleur (420) reçu dans le premier boîtier (210, 410 ou 1100) et configuré pour émettre un son avant et un son arrière,
dans lequel le premier boîtier (210, 410, ou 1100) comprend un trou d'émission de son (413 ou 1130) configuré pour émettre un son arrière généré par le haut-parleur (420) et disposé dans une surface arrière du premier boîtier (210, 410 ou 1100),
dans lequel le trou d'émission de son (413) est disposé dans une partie adjacente à la surface latérale du premier boîtier (410) la plus éloignée du haut-parleur (420).

2. Dispositif électronique de la revendication 1, dans lequel le trou d'émission de son (413 ou 1130) est configuré pour être positionné dans une partie adjacente à la charnière (240).

3. Dispositif électronique de la revendication 1 ou 2, dans lequel le trou d'émission de son (413 ou 1130) est ouvert vers l'extérieur du premier boîtier (210, 410, ou 1100) dans un état de pliage du dispositif électronique par la charnière (240).

4. Dispositif électronique de l'une des revendications précédentes, dans lequel le premier boîtier (210, 410 ou 1100) comprend un espace intérieur (414 ou 1140) configuré pour transférer le son arrière vers le trou d'émission de son (413 ou 1130).

5. Dispositif électronique de l'une des revendications précédentes , comprenant en outre un conduit (415 ou 1150) dont une extrémité (415c ou 1150c) est reliée au trou d'émission de son (413 ou 1130) pour guider le son arrière vers le trou d'émission de son (413 ou 1130).

6. Dispositif électronique de l'une des revendications précédentes, comprenant en outre un élément étanche à l'eau (450) prévu pour empêcher un corps étranger de pénétrer dans le premier boîtier (410, ou 1100) à partir du trou d'émission de son (413 ou 1130),
dans lequel le son arrière est émis à travers l'élément étanche à l'eau (450) vers le trou d'émission de son (413 ou 1130), dans lequel l'élément étanche à l'eau (450) est formé pour permettre à un gaz de passer à travers celui-ci, et
dans lequel une pression interne du premier boîtier (410 ou 1100) est réglée lorsque le gaz à l'intérieur du premier boîtier (410 ou 1100) passe à travers l'élément étanche à l'eau (450).

7. Dispositif électronique de l'une des revendications précédentes, comprenant en outre un affichage (230 ou 405) disposé sur le premier boîtier (210, 410, ou 1100), la charnière (240), et le deuxième boîtier (220), et
dans lequel le haut-parleur (420) est configuré pour émettre le son arrière dans une première direction (D1) qui est une direction vers l'affichage (230 ou 405) et une deuxième direction (D2) opposée à la première direction (D1).

8. Dispositif électronique de l'une des revendications précédentes, comprenant en outre un affichage (230 ou 405) disposé sur le premier boîtier (210, 410 ou 1100), la charnière (240), et le deuxième boîtier (220), et
dans lequel le trou d'émission de son (413 ou 1130) est prévu dans une surface opposée à l'affichage (230 ou 405).

9. Dispositif électronique de l'une des revendications précédentes, dans lequel le premier boîtier (410 ou 1100) comprend un couvercle arrière (412 ou 1120), et
dans lequel le couvercle arrière (412 ou 1120) comprend une ouverture formée dans une position correspondant au trou d'émission de son (413 ou 1130), ou dans lequel le couvercle arrière (412 ou 1120) comprend un évidement (4122 ou 1121) formé dans un bord adjacent au trou d'émission de son (413 ou 1130) pour ouvrir le trou d'émission de son (413 ou 1130).

10. Dispositif électronique de l'une des revendications précédentes, dans lequel le premier boîtier (410) comprend un couvercle arrière (412), et
dans lequel le couvercle arrière (412) est disposé de manière à ce qu'une partie du couvercle arrière (412) chevauche une partie du trou d'émission de son (413).

11. Dispositif électronique de l'une des revendications précédentes, dans lequel le haut-parleur (420) est configuré pour être reçu dans une partie adjacente à une surface latérale du premier boîtier (410 ou 1100) la plus éloignée du trou d'émission de son (413 ou 1130) ou de la charnière (240).

12. Dispositif électronique de l'une des revendications précédentes,
dans lequel un côté du trou d'émission de son (413 ou 1130) est ouvert dans une surface exposée à un extérieur du premier boîtier (210, 410 ou 1100) dans un état plié du premier boîtier (210, 410 ou 1100) et du deuxième boîtier (220) par la charnière (240).

13. Dispositif électronique de la revendication 12, dans lequel un espace intérieur (414 ou 1140) servant de chemin à travers lequel le son arrière doit être transféré est prévu dans le premier boîtier (210, 410 ou 1100).

14. Dispositif électronique de la revendication 12 ou 13, dans lequel le premier boîtier (210, 410 ou 1100) comprend un conduit (415 ou 1150) qui relie un autre côté du trou d'émission de son (413 ou 1130) à l'espace intérieur (414 ou 1140) pour guider le son arrière transféré à travers l'espace intérieur (414 ou 1140) vers le trou d'émission de son (413 ou 1130).

15. Dispositif électronique de la revendication 14, dans lequel le conduit (415 ou 1150) comprend un élément (450) pour bloquer un corps étranger de pénétrer dans l'espace intérieur (414 ou 1140) et empêcher la perturbation d'un flux du son arrière de l'espace intérieur (414 ou 1140) vers le trou d'émission de son (413 ou 1130).
